# EUROPÄISCHE PATENTANMELDUNG

(11) **EP 4 834 456 A1**
(43) Veröffentlichungstag der Anmeldung: **04.11.2026**
(21) Anmeldenummer: 25173267.3
(22) Anmeldetag: 29.04.2025
(51) Int. Cl.: B01D 39/08, B01D 39/16, C02F 1/00, C02F 1/50, D03D 1/00, D03D 15/258, D03D 15/283, D03D 15/67, D03D 27/02, D03D 27/12

(54) **FILTERTUCH UND VERFAHREN ZUR WASSERFILTRATION**

(71) Anmelder: R+F FilterElements GmbH, 31134 Hildesheim (DE)
(72) Erfinder: Rippel, Anna, 47799 Krefeld (DE); Franke, Christopher, 31134 Hildesheim (DE)
(74) Vertreter: Lüdtke, Thomas

(57) **Zusammenfassung**

Die Erfindung betrifft ein Filtertuch (1) zur Wasserfiltration, aufweisend einen Geweberücken (4) und Polfasern (2), wobei der Geweberücken (4) durch Geweberückenfasern (7) gebildet wird und die Polfasern (2) zumindest teilweise an dem Geweberücken (4) fixiert sind und die Polfasern (2) von dem Geweberücken (4) abragen und dabei eine Höhe aufweisen.

Erfindungsgemäß ist vorgesehen, dass von dem Geweberücken (4) erste Polfasern (2a) abragen, die eine erste Höhe (h1) aufweisen, und zweite Polfasern (2b) abragen, die eine zweite Höhe (h2) aufweisen, so dass die ersten Polfasern (2a) in einer ersten Ebene (E1) enden und die zweiten Polfasern (2b) in einer zweiten Ebene (E2) enden, wobei die erste Ebene (E1) und die zweite Ebene (E2) um mindestens 2mm voneinander beabstandet sind und die ersten Polfasern (2a) der ersten Höhe (h1) und die zweiten Polfasern (2b) der zweiten Höhe (h2) jeweils mindestens 30% der gesamten Polfasern (2) des Filtertuchs (1) ausmachen.

## Beschreibung

Die Erfindung betrifft ein Filtertuch zur Wasserfiltration sowie ein Verfahren zur Wasserfiltration mit einem Filtertuch.

Filtertücher zur Filtration von Wasser sind aus dem Stand der Technik bekannt. Insbesondere in Klärwerken werden Filtertücher im Rahmen des Reinigungsprozesses von Abwasser genutzt, vorzugsweise in der letzten Reinigungsstufe. Beispielhaft ist ein solches Filtertuch in EP 4 464 395 A1 beschrieben. Weitere Filtertücher sind in US 6 103 132 A,
WO 2007/076019A2, CN 111 632 432 A oder US 2021/321696 A1 beschrieben.

Für die Wasserfiltration werden beispielsweise Scheibenfilter verwendet, wie beispielsweise in EP 3 713 655 B1 beschrieben, welche durch mit Filtertuch bespannte Rahmen gebildet werden. Auch weitere Filtertypen wie Trommelfilter, Drucktrommelfilter und Traveling Bridge Sandfilter können ein solches Filtertuch aufweisen. Mit entsprechenden Filtern ist es unter anderem möglich, Phosphor, Mikropartikel und Rückstände von Medikamenten und Industrieprodukten aus dem Abwasser herauszufiltern.

Neben der Abwasserfiltration ist es auch möglich, Filtertücher zur Mischwasserbehandlung, Phosphorentfernung durch Flockungsfiltration, Rohabwasserfiltration (primary), Schlussfiltration (tertiary und quaternary / tertiäre und quartäre), Spurenstoffentfernung, Behandlung von Oberflächenwasser, Behandlung von Straßenabwasser, Trinkwasseraufbereitung oder Vorfiltration für eine Desinfektion zu verwenden.

Bei sämtlichen beschriebenen Filtrationsarten ist das Filtertuch mechanischen, chemischen und biologischen Belastungen ausgesetzt, wodurch das im jeweiligen Filter verwendete Filtertuch nach einer gewissen Zeit ersetzt werden muss.

Die mechanischen Belastungen betreffen beispielsweise ein Zusetzen des Filtertuchs mit Partikeln. Darüber hinaus strapaziert die Strömung des durchgeleiteten Wassers das Filtertuch mechanisch. Ferner findet eine mechanische Belastung beispielsweise durch die Absaugung der Tücher sowie durch abrasive Partikel statt.

Die chemischen Belastungen betreffen beispielsweise das Zersetzen des Filtertuchs durch aggressive Stoffe im durchgeleiteten Wasser.

Die biologischen Belastungen betreffen beispielsweise ein Ansiedeln von Bakterien, Viren, Algen oder Algenblüten auf dem Filtertuch, welche einen Biofilm bilden und das Filtertuch zusetzen. Insbesondere bei der Abwasserreinigung können Bakterien im Rahmen der biologischen Abwasserreinigung zur Entfernung von unter anderem Kohlenstoff und Stickstoff verwendet werden. Eben diese Bakterien können jedoch im Rahmen der letzten Reinigungsstufe mittels Filtertuch aufweisender Filter, vorzugsweise Scheibenfiltern, zu kurzen Standzeiten der Filter führen. Der durch die Bakterien gebildete Biofilm setzt das Filtertuch zu.

Sämtliche genannten Belastungen verkürzen die Standzeit des Filtertuchs.

Der Erfindung liegt die Aufgabe zugrunde, ein Filtertuch sowie ein Verfahren bereitzustellen, die eine einfache und effektive Wasserfiltration ermöglichen.

Diese Aufgabe wird gelöst durch ein Filtertuch und ein Verfahren gemäß den unabhängigen Ansprüchen. Die Unteransprüche geben bevorzugte Weiterbildungen an.

Erfindungsgemäß weist das Filtertuch zur Wasserfiltration einen Geweberücken und Polfasern auf, wobei der Geweberücken zumindest teilweise durch Geweberückenfasern gebildet wird, wobei die Polfasern zumindest teilweise an dem Geweberücken fixiert sind und die Polfasern von dem Geweberücken abragen bzw. abstehen und dabei eine Höhe aufweisen bzw. in einer Höhe über dem Geweberücken enden, wobei von dem Geweberücken erste Polfasern abragen, die eine erste Höhe aufweisen bzw. in einer ersten Höhe über dem Geweberücken enden, und zweite Polfasern abragen, die eine von der ersten Höhe abweichende zweite Höhe aufweisen bzw. in der zweiten Höhe über dem Geweberücken enden, so dass die ersten Polfasern in einer ersten Ebene enden und die zweiten Polfasern in einer zweiten Ebene enden, wobei die erste Ebene und die zweite Ebene in Höhenrichtung, d.h. senkrecht zur Außenseite des Geweberückens gemessen, um mindestens 2 mm, vorzugsweise mindestens 3mm, insbesondere mindestens 4mm, voneinander beabstandet sind und die ersten Polfasern der ersten Höhe mindestens 30% der gesamten Polfasern des Filtertuchs ausmachen und die zweiten Polfasern der zweiten Höhe mindestens 30% der gesamten Polfasern des Filtertuchs ausmachen.

Demzufolge werden also innerhalb des Filtertuchs übereinander verlaufend bzw. übereinander liegend zwei unterschiedliche Filterschichten ausgebildet, wodurch sich die effektive Filtrationsfläche unter dem Erhalt einer dreidimensionalen Struktur erhöht. Dies ermöglicht, dass ein Teil von Partikeln im zu filtrierenden Medium, beispielsweise grobe Partikel, bereits durch die ersten Polfasern, die beispielsweise die längeren Polfasern im Filtertuch darstellen, abgefangen werden können und ein weiterer Teil, beispielsweise feinere Partikel, erst durch die zweiten Polfasern, die dann die kürzeren Polfasern im Filtertuch darstellen, herausgefiltert werden. Diese Erhöhung der Filtrationsfläche führt zu einer insgesamt effizienteren Wasserfiltration mit einfachen Mitteln. Dadurch kann gegenüber dem Stand der Technik aus beispielsweise EP 3 713 655 B1 auf einen profilierten Rückspülschuh verzichtet werden, dessen gekerbte Oberfläche die gleichlangen Polfasern des Filtertuchs, die demnach lediglich in einer Höhe (toleranzbehaftet) enden bzw. in nur einer Ebene (toleranzbehaftet) liegen, unterschiedlich verdrängt und daher auf alternative Weise durch eine Konturierung der gleichlangen Polfasern zu einer Ausbildung unterschiedlicher Filterschichten führt.

Unter dem Begriff Polfasern werden im Rahmen der Anmeldung vorzugsweise Fasern verstanden, welche auf der rechten Warenseite des Filtertuchs einen Faserflor durch ein zusätzliches Fadensystem in der Kette (Polkette oder Florkette) zu dem bereits bestehenden Kettsystem des Geweberückens bilden. Dieser Faserflor wird auch als Plüsch und weiter als Kettsamt bezeichnet. Die Polfasern sind dazu zumindest teilweise mit den Geweberückfasern verwebt, verwirkt, verstrickt und/oder vertuftet, um ein Ausreißen der Polfasern vom Geweberücken zu verhindern. Die Pol- oder Flornoppen binden dabei am Schuss des Geweberückens an, vorzugsweise als W-Noppen oder als V-Noppen. Die Höhe der jeweiligen Polfasern wird dabei von einer Außenseite der genutzten bzw. rechten Warenseite gemessen, wenn die jeweilige Polfaser (ideal) senkrecht vom Geweberücken absteht. Es gibt also am Filtertuch in diesem Zustand erfindungsgemäß zumindest zwei (vorzugsweise genau zwei) definierte Höhen (toleranzbehaftet), in denen jeweils zumindest 30% der jeweils unterschiedlich langen Polfasern enden.

Vorzugsweise ist dabei vorgesehen, dass die Polfasern durch eine Florkette gebildet sind, die jeweils an den Geweberückenfasern angebunden ist, wobei sich je Florkette zwei Polfasern bilden und die Polfasern derselben Florkette vorzugsweise dieselbe Höhe aufweisen. Dies vereinfacht die Herstellung des Filtertuchs.

Vorzugsweise ist weiterhin vorgesehen, dass die ersten Polfasern und/oder die zweiten Polfasern jeweils als eine glatte bzw. untexturierte Faser ausgebildet sind. Weiterhin können alternativ dazu oder in Kombination damit die zweiten Polfasern und/oder die ersten Polfasern jeweils als eine (dauerhaft) texturierte Faser ausgebildet sein, beispielsweise als eine aufgebauschte oder gekräuselte oder gewellte oder geschlungene Faser. Eine solche Texturierung lässt sich beispielsweise durch ein mechanisches oder ein thermomechanisches Verfahren erreichen, in denen eine solche Faser dauerhaft aufgebauscht, gekräuselt, gewellt oder geschlungen wird. Die Höhe solcher texturierten Fasern bezieht sich dann auf den jeweils texturierten Zustand, so dass die jeweilige Faser im texturierten Zustand in der jeweils zugeordneten Ebene liegt.

Durch eine solche Bereitstellung lässt sich die Filterwirkung für die jeweilige Höhe der jeweiligen Polfaser flexibel einstellen und damit die Erhöhung der Filtrationsfläche und den Erhalt einer dreidimensionalen Struktur im Gewebe einfach und effizient erreichen. Dabei ist vorzugsweise vorgesehen, dass die längeren (ersten) Polfasern glatte Polfasern sind und die kürzeren (zweiten) Polfasern texturierte Polfasern, um beispielsweise zunächst grobe Partikel in der äußeren (ersten) Ebene und feinere Partikel in der inneren (zweiten) Ebene effizient abfangen zu können. Die kürzere Polfasern können aber grundsätzlich ebenfalls glatte Fasern sein.

Vorzugsweise ist weiterhin vorgesehen, dass die Polfasern und/oder die Geweberückenfasern Polymere aufweisen, insbesondere Polyamid, Polyester, Polyethylenterephthalat und/oder Polypropylen, sowie deren Rezyklate, d.h. das jeweilige Polymer in seiner recycelten Form. Geweberückenfasern und/oder Polfasern aus Polymeren führen zu einer guten Integrität der jeweiligen Fasern und somit zu einer guten mechanischen sowie chemischen Stabilität des Filtertuchs. Die Standzeiten des Filtertuchs werden hierdurch verlängert. Darüber hinaus sind entsprechende Geweberückenfasern und/oder Polfasern günstig im großen Maßstab verfügbar.

Vorzugsweise ist weiterhin vorgesehen, dass die Polfasern und/oder die Geweberückenfasern durch Multifilamente, Mikrofasern, Ultrafeinfasern, Monofilamente, Stapelfasern und/oder Fibrilliertes Tape-Garn gebildet werden.

Unter dem Begriff Multifilamente werden Fasern verstanden, die aus Mehrlochdüsen ersponnen sind und düsenweise mit oder ohne Drehung zusammengefasst werden. Diese können in glatter und/oder texturierter Form vorliegen und bestehen aus synthetischen Chemiefasern. Multifilamente weisen den Vorteil auf, dass sie aus vielen feinen Endlosfasern bestehen, die im glatten Zustand dicht und gleichmäßig parallel vorliegen und somit gut abzureinigen sind. Im texturierten Zustand liegen sie mehr oder weniger gekräuselt und somit elastisch, bauschig und voluminös vor, wodurch sie zwar schlechter abzureinigen sind, aber ein verbessertes Partikelaufnahmevermögen aufweisen.

Unter dem Begriff Mikrofasern werden Fasern verstanden, deren Einzelfaserfeinheit geringer als 1 dtex ist, genauer zwischen 0,3 und 0,8 dtex. Diese können ebenfalls in glatter und/oder texturierter Form vorliegen. Mikrofasern weisen den Vorteil auf, dass, da sie so fein sind, viele von ihnen eng zusammengepackt werden können. Es werden viel mehr feine Fasern benötigt, um einen Faden herzustellen, woraus sich eine größere dichtere Fadenoberfläche ergibt. Somit ist ein verbessertes Partikelrückhaltevermögen insbesondere von kleineren Partikeln gegeben.

Unter dem Begriff Ultrafeinfasern werden Fasern verstanden, deren Einzelfaserfeinheit geringer als 0,3 dtex ist. Ultrafasern weisen den Vorteil auf, dass, da sie so noch feiner als Mikrofasern sind, noch mehr von ihnen eng zusammengepackt werden können. Es werden nochmals erheblich mehr feine Fasern benötigt als bei der Mikrofaser, um einen Faden herzustellen, woraus sich eine noch größere dichtere Fadenoberfläche ergibt. Somit ist ein verbessertes Partikelrückhaltevermögen insbesondere von noch kleineren Partikeln gegeben. Auch diese können in glatter und/oder texturierter Form vorliegen.

Unter dem Begriff Monofilamente werden Fasern verstanden, die aus Einlochdüsen ersponnen sind. Je nach Düsenöffnung können feine bis grobe Filamentdurchmesser sowie verschiedene Querschnittsformen erzeugt werden. Monofilamente weisen den Vorteil auf, dass sie als eine einzige Endlosfaser eine gewisse Härte und Steifigkeit aufweisen, welche insbesondere verwendet im Geweberücken Stabilität erzeugen. Des Weiteren sind sie glatt, wodurch eine verbesserte Abreinigung gegeben ist.

Unter dem Begriff Stapelfaser werden geschnittene Chemiefasern verstanden, die auf mechanischem Weg durch Zusammendrehen dieser zu Spinnfasergarnen werden. Stapelfasern oder Spinnfasergarne mit vorzugsweiser langer Stapellänge weisen den Vorteil auf, dass sie mehr oder weniger bauschig und voluminös sind und durch ihre Haarigkeit zwar schlechter abzureinigen sind, aber ein verbessertes Partikelaufnahmevermögen aufweisen, insbesondere als texturierte Polfaser.

Unter dem Begriff Fibrilliertes Tape-Garn oder Monotape oder Schlitzfolie werden "Fasern" verstanden, bei denen ein einzelnes Band hergestellt und dann längs geschnitten wird, um es in mehrere Bänder zu teilen, wodurch eine Gitterstruktur entsteht. Fibrillierte Tape-Garne weisen den Vorteil auf, dass sie leicht sind, abriebfest und eine hohe Zugfestigkeit sowie Haltbarkeit aufweisen.

Vorzugsweise ist weiterhin vorgesehen, dass die ersten Polfasern der ersten Höhe mindestens 40% der gesamten Polfasern, insbesondere 50% der gesamten Polfasern des Filtertuchs, und/oder die zweiten Polfasern der zweiten Höhe jeweils mindestens 40% der gesamten Polfasern, insbesondere 50% der gesamten Polfasern des Filtertuchs, ausmachen. Auf diese Weise ist eine gleichmäßige Filtrierung und Unterteilung in die beiden Ebenen über das gesamte Filtertuch gegeben.

Vorzugsweise ist weiterhin vorgesehen, dass die erste Ebene und die zweite Ebene in Höhenrichtung, d.h. senkrecht zur Außenseite gemessen, um zwischen 2mm und 10mm, beispielsweise zwischen 3mm und 10mm, insbesondere zwischen 4mm und 10mm, voneinander beabstandet sind, wodurch sich eine effiziente Filterwirkung erzielen lässt.

Vorzugsweise ist weiterhin vorgesehen, dass die erste Höhe der ersten Polfasern zwischen 13mm und 17mm, vorzugsweise 15mm, beträgt und/oder die zweite Höhe der zweiten Polfasern einen Wert von zwischen 6mm und 12mm annimmt (bei gleichzeitigem Abstand zwischen den Ebenen von mind. 2mm). Dies sind einfach einzustellende Längen für derartige Filtertücher, bei denen die Erhöhung der Filtrationsfläche und der Erhalt einer dreidimensionalen Struktur des Gewebes zu einer besonders guten Filtrationswirkung führt.

Vorzugsweise ist weiterhin vorgesehen, dass die Polfasern mit zunehmendem Abstand zum Geweberücken auffächern, was die Herstellung vereinfacht und die Filterwirkung verbessert.

Vorzugsweise ist weiterhin vorgesehen, dass die Geweberückenfasern und/oder die Polfasern Metall aufweisen, wobei das Metall dazu ausgebildet ist, bei Kontakt mit Wasser antimikrobielle Metallionen bereitzustellen, wobei das Metall vorzugsweise ausgewählt ist aus der Gruppe bestehend aus Gold, Silber, Zink, Kupfer, Zirkon und Quecksilber.

Hierdurch wir vorteilhafterweise die Bildung eines Biofilms auf den Geweberückenfasern und/oder den Polfasern wirksam verhindert oder reduziert, wodurch sich die Standzeit des Filtertuchs insgesamt verlängert, da sich das Filtertuch nicht durch den Biofilm zusetzt. Ein solches Filtertuch kann also insbesondere für eine Wasserfiltration eingesetzt werden, bei dem das Wasser eine hohe Bakterienbelastung aufweist. Beispielsweise kann das Filtertuch für die Filtration im Rahmen der Abwasserreinigung genutzt werden, insbesondere in der letzten Reinigungsstufe, wobei in einer vorherigen Reinigungsstufe vorzugsweise eine biologische Abwasserreinigung erfolgt ist.

Die antimikrobiellen Metallionen entstehen dabei, wenn Wasser in Kontakt mit dem Metall kommt. Bei Kontakt mit Wasser oxidiert das Metall und gibt positiv geladene Ionen an die Umgebung frei. Metallionen von Metallen aus der Gruppe der Gold-, Silber-, Zink-, Kupfer-, Zirkon- und Quecksilbermetalle haben sich dabei als besonders wirksam gegen die Bildung eines Biofilms erwiesen. Bei der Wahl des Metalls ist zusätzlich auf die Umweltverträglichkeit zu achten. Bevorzugt wird Silber gewählt.

Antimikrobielle Metallionen weisen biozide Eigenschaften auf. Die hohe Reaktivität der geladenen Metallionen ist die Grundlage der antimikrobiellen Wirkung der Metallionen. Die antimikrobiellen Metallionen reagieren mit kleinsten Ansätzen eines Biofilms und schädigen oder zerstören ihn dabei. Ein das Filtertuch zusetzender Biofilm kann sich somit gar nicht erst bilden. Durch die antimikrobiellen Metallionen ist somit ergänzend eine effektive Bekämpfung von Bakterien, Viren, Algen und Algenblüten, zusammengefasst als Biofilm, möglich.

Vorzugsweist ist weiterhin vorgesehen, dass das Metall in den Geweberückenfasern und/oder in den Polfasern durch Metall-Nanopartikel gebildet ist, wobei die Metall-Nanopartikel ausgebildet sind, die antimikrobiellen Metallionen bereitzustellen.

Ein Vorteil besteht darin, dass die antimikrobielle Wirkung der antimikrobiellen Metallionen permanent und nicht auswaschbar ist, da bei Kontakt mit Wasser durch die Metall-Nanopartikel beständig neue antimikrobielle Metallionen gebildet werden. Die Metall Nanopartikel weisen beispielsweise Abmessungen im Bereich von 1 nm - 100 nm auf. Beispielsweise kann der Durchmesser der Metall-Nanopartikel 1 nm - 100 nm betragen.

Die Konzentration der Metall-Nanopartikel im Filtertuch liegt beispielsweise im Bereich von 1 mg/kg - 20.000 mg/kg Filtertuch, vorzugsweise im Bereich von 50 mg/kg - 1.000 mg/kg Filtertuch. Beispielsweise kann ein Filtertuch Silber-Nanopartikel in einer Konzentration im Bereich von 50 mg/kg - 1.000 mg/kg Filtertuch aufweisen. Dieser Bereich stellt einen guten Kompromiss aus wirtschaftlichen Überlegungen und funktionalen Überlegungen dar.

Vorzugsweise ist weiterhin vorgesehen, dass die Metall-Nanopartikel einer Extrusionsmasse der Geweberückenfasern und/oder der Polfasern hinzugefügt sind. Ein Hinzugeben von Metall-Nanopartikeln in die Extrusionsmasse der Geweberückenfasern und/oder Polfasern ist besonders vorteilhaft, da dies eine einfache Methode zum Durchsetzen der Geweberückenfasern und/oder Polfasern mit Metall-Nanopartikeln darstellt. Darüber hinaus wird eine homogene Verteilung von Metall-Nanopartikeln in den Geweberückenfasern und/oder Polfasern ermöglicht.

Vorzugsweise ist weiterhin vorgesehen, dass das Metall in den Geweberückenfasern und/oder in den Polfasern durch Metalldrähte gebildet ist, insbesondere eingewebte, eingewirkte, eingestrickte und/oder eingetuftete Metalldrähte, wobei die Metalldrähte ausgebildet sind, die antimikrobiellen Metallionen bereitzustellen.

Diese Ausführungsform kann alternativ oder zusätzlich zu den Metall-Nanopartikeln vorgesehen sein. Die Metalldrähte stellen somit zumindest einen Teil, vorzugsweise den gesamten Teil des im Filtertuch angeordneten Metalls dar. Ein Einweben, Einwirken, Einstricken und/oder Eintuften der Metalldrähte in das Filtertuch stellt eine einfache und stabile Methode des Anordnens von Metall in der jeweiligen Faser dar.

Vorzugsweise ist weiterhin vorgesehen, dass die Polfasern einen Pol-Titer im Bereich von 100 dtex bis 2200 dtex, insbesondere im Bereich 250 dtex bis 1100 dtex aufweisen und/oder die Geweberückenfasern einen Gewebe-Titer im Bereich von 100 dtex bis 2200 dtex, insbesondere im Bereich 250 dtex bis 1100 dtex aufweisen.

Der Titer wird gemäß ISO 1144 und DIN 60905 bestimmt und angegeben. 1 dtex entspricht somit 1 Gramm pro 10.000 Meter und ist ein Maß für die Feinheit der betreffenden Faser.

Ein Titer im Bereich von 100 dtex bis 2200 dtex hat sich als beson-ders vorteilhaft erwiesen, da so eine ausreichende Dichte der Gewebeober-fläche erzielt und die entsprechende Filtrationswirkung erreicht werden kann. Ein Titer im Bereich von Bereich 250 dtex bis 1100 dtex verstärkt diese Vorteile weiter.

Gemäß einer weiteren Ausführungsform des Filtertuchs ist das Filtertuch auf einem Scheibenfilter, Trommelfilter, Drucktrommelfilter und/oder Traveling Bridge Sandfilter fixierbar. Das Filtertuch ist dabei durch eine entsprechende Konfektionierung und das Anbringen von Befestigungsmöglichkeiten an den jeweiligen Filtern fixierbar. Dies ermöglicht unter anderem die Verwendung des Filtertuchs im Bereich der Abwasserfiltration, beispielsweise zum Herausfiltern von Phosphor, Mikropartikeln, Pigmenten und/oder Medikamentenrückständen, insbesondere in der letzten Stufe der Abwasserfiltration. Das Herausfiltern von Phosphor und Medikamentenrückständen erfolgt hierbei vorzugsweise in Verbindung mit Flockenbildung durch FE3+, FE2+ oder Aktivkohle.

Das Filtertuch eignet sich also zur Abwasserfiltration, Mischwasserbehandlung, Phosphorentfernung durch Flockungsfiltration, Rohabwasserfiltration (primary), Schlussfiltration (tertiary und quaternary / tertiäre und quartäre), Spurenstoffentfernung, die Behandlung von Oberflächenwasser, die Behandlung von Straßenabwasser, eine Trinkwasseraufbereitung oder eine Vorfiltration für eine Desinfektion.

Das Filtertuch weist dazu optional beispielsweise die folgenden weiteren Eigenschaften auf:
Pol- sowie Geweberückenfasern aus Polyestermikrofasern bzw. Mono- und Multifilamenten, eine Reißfestigkeit von >890 N in Kett- und Schussrichtung sowie eine Maschenweite im Geweberücken von ≤ 400 µm und einem Flächengewicht von 650 g/m².

Die Erfindung betrifft weiterhin ein Verfahren zur Wasserfiltration mit dem erfindungsgemäßen Filtertuch, wobei Wasser zur Abwasserreinigung, Mischwasserbehandlung, Phosphorentfernung durch Flockungsfiltration, Rohabwasserfiltration, Schlussfiltration, Spurenstoffentfernung, Behandlung von Oberflächenwasser, Behandlung von Straßenabwasser, Trinkwasseraufbereitung oder Vorfiltration für eine Desinfektion durch das Filtertuch geleitet wird.

Die Erfindung wird im Folgenden anhand der beiliegenden Zeichnungen an einigen Ausführungsformen erläutert. Es zeigen:
- Figur 1: zeigt eine schematische Darstellung einer Ausführungsform eines Filtertuchs auf einem Segment eines Scheibenfilters;
- Figur 2: zeigt eine schematische Darstellung einer Ausführungsform eines Gewebequerschnitts des Filtertuchs;
- Figur 3Â: zeigt eine schematische Darstellung einer ersten Ausführungsform einer Faser eines Filtertuchs;
- Figur 3B: zeigt eine schematische Darstellung einer zweiten Ausführungsform einer Faser eines Filtertuchs.

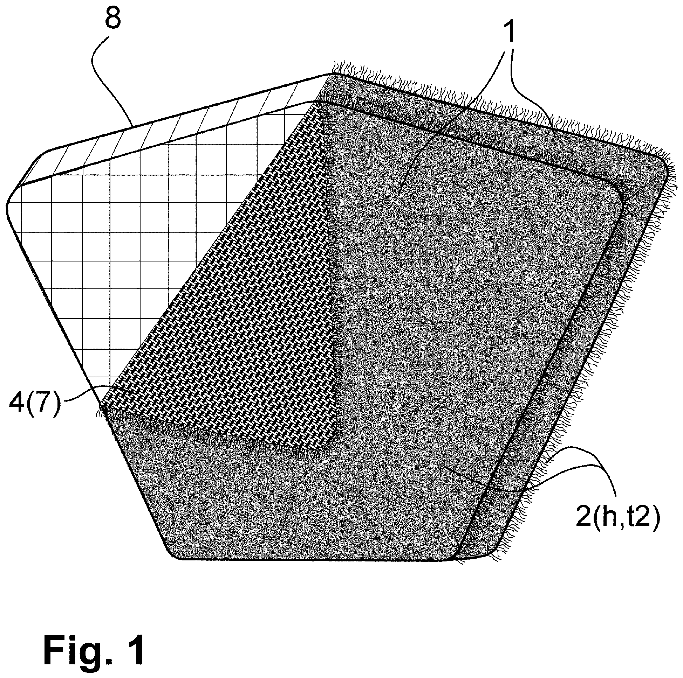

Figur 1 zeigt eine Ausführungsform eines Filtertuchs 1 auf einem Scheibenfiltersegment 8. Das Scheibenfiltersegment 8 wird durch eine Stützstruktur gebildet, wobei das Filtertuch 1 auf dem Scheibenfilter 8 befestigt wird. Hierfür ist das Filtertuch 1 entsprechend zu konfektionieren und mit Befestigungsmöglichkeiten, beispielsweise Klettverschlüssen zu versehen (nicht dargestellt). Das Filtertuch 1 ist bei entsprechender Konfektionierung alternativ auch zusammen mit anderen Filtertypen, beispielsweise einem Trommelfilter, Drucktrommelfilter und/oder Traveling Bridge Sandfilter nutzbar.

Das Filtertuch 1 weist einen Geweberücken 4 auf, welcher durch Geweberückenfasern 7 gebildet wird. Zur Herstellung des Geweberückens 4 werden die Geweberückenfasern 7 als Kett- und Schussfadensysteme rechtwinklig zueinander verkreuzt, wobei das Verkreuzen je nach Art der Bindung (z.B. Leinwandbindung, Köperbindung, Atlasbindung, etc.) variiert. Die Kette stellt dabei die Gesamtheit der Fäden dar, welche bei der Herstellung des Geweberückens in Längsrichtung (Warenlaufrichtung) verlaufen. Der Schuss hingegen ist die Gesamtheit der Fäden, welche bei der Herstellung in Querrichtung liegen.

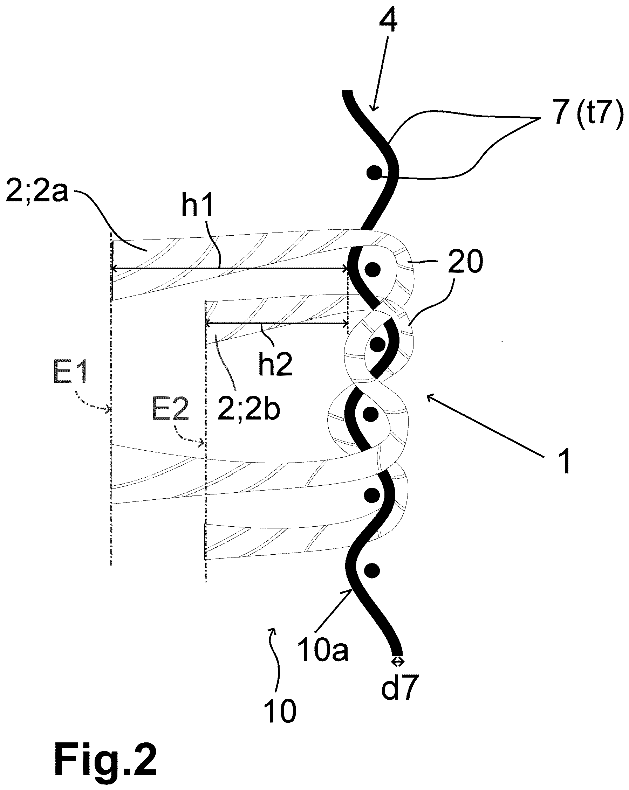

Gemäß der in Figur 2 dargestellten Ausführungsform sind die Geweberückenfasern 7 durch Monofilamente gebildet, wobei die Geweberückenfasern 7 einen Gewebe-Durchmesser d7 im Bereich von 0,05 mm bis 2 mm, insbesondere im Bereich von 0,10 mm bis 1 mm aufweisen. Ein Gewebe-Durchmesser d7 der Geweberückenfasern 7 im Bereich von 0,10 mm bis 1 mm hat sich als besonders vorteilhaft erwiesen, da dem Geweberücken 4 so die notwendige Festigkeit und Dimensionsstabilität gegeben werden kann.

Weiter weisen die Geweberückenfasern 7 einen Gewebe-Titer t7 im Bereich von 100 dtex bis 2200 dtex, insbesondere im Bereich von 250 dtex bis 1100 dtex auf. Ein Gewebe-Titer t7 im Bereich von 250 dtex bis 1100 dtex hat sich als besonders vorteilhaft erwiesen, da so eine ausreichende Dichte der Gewebeoberfläche erzielt werden kann. Der Titer wird gemäß ISO 1144 und DIN 60905 bestimmt und angegeben. 1 dtex entspricht somit 1 Gramm pro 10.000 Meter und ist ein Maß für die Feinheit der betreffenden Faser.

An dem Geweberücken 4 sind wie in Fig. 2 dargestellt mehrere Polfasern 2 fixiert. Unter dem Begriff Polfasern 2 werden einzelne vom Geweberücken 4 abstehende oder abragende Fasern verstanden, wobei mehrere solcher einzelnen Polfasern 2 zusammen einen sog. Faserflor (Plüsch oder Samt) bilden.

Die Fixierung der einzelnen Polfasern 2 erfolgt durch Verweben, Verwirken, Verstricken und/oder Vertuften an den Geweberückenfasern 7. Die einzelnen Polfasern 2 werden dabei auf einer rechten Warenseite 10 des Filtertuchs 1 aus einem weiteren (dritten) Flor-Fadensystem gebildet. Dieses weitere Flor-Fadensystem wird vorzugsweise durch eine zusätzliche Florkette 20 bzw. Polkette gebildet, d.h. es wird eine zusätzliche Kette in den Geweberücken 4 eingebunden, die am Schuss des Geweberückens 4 bindet.

In der dargestellten Ausführung ist die jeweilige Florkette 20 an drei Stellen bzw. drei Schüssen des Geweberückens 4 abgebunden, d.h. sie ist in Form einer W-Noppe in den Geweberücken 4 eingearbeitet. Alternativ dazu kann die jeweilige Florkette 20 aber auch an nur einer Stelle bzw. an nur einem Schuss des Geweberückens 4 abgebunden sein, d.h. sie ist in Form einer V-Noppe in den Geweberücken 4 eingearbeitet (nicht dargestellt).

Durch eine solche Einarbeitung der jeweiligen Florkette 20 an dem Geweberücken 4 bilden sich je Florkette 20 zwei Polfasern 2, die jeweils bis zu einer bestimmten Höhe h von dem Geweberücken 4 abstehen. Die Höhe h der jeweiligen Polfaser 2 wird dabei ausgehend von einer Außenseite 10a der genutzten bzw. rechten Warenseite 10 gemessen, wenn die jeweilige Polfaser 2 (ideal) senkrecht vom Geweberücken 4 absteht. Gemäß der vorliegenden Ausführungsform fächern die Polfasern 2 mit zunehmendem Abstand zum Geweberücken 4 zusätzlich auf.

Wie in Fig. 2 dargestellt, enden die abstehenden Polfasern 2 in zwei unterschiedlichen Höhen h, d.h. in einer ersten Höhe h1 und in einer zweiten Höhe h2. Über die gesamte Fläche des Filtertuchs 1 existieren also erste Polfasern 2a, die in einer ersten Ebene E1 enden, und zweite Polfasern 2b, die in einer zweiten Ebene E2 enden, wobei sich die erste Ebene E1 von der zweiten Ebene E2 unterscheidet. Eine Florkette 20 weist dabei entweder nur in der ersten Ebene E1 endende erste Polfasern 2a oder nur in der zweiten Ebene E2 endende zweite Polfasern 2b auf.

Dabei ist vorzugsweise vorgesehen, dass innerhalb einer betrachteten Fläche des Filtertuchs 1, beispielsweise über das gesamte Filtertuch 1, in etwa die Hälfte der Polfasern 2 erste Polfasern 2a (entspr. erste Höhe h1) und in etwa die andere Hälfte der Polfasern 2 zweite Polfasern 2b (entspr. zweite Höhe h2) sind. Es liegt also eine ungefähre Gleichverteilung der unterschiedlich langen Polfasern 2; 2a, 2b über die jeweils betrachtete Fläche vor. Je nach Anwendung kann dies Verteilung aber auch variieren.

Vorzugsweise sind die erste Ebene E1 und die zweite Ebene E2 um zwischen 2mm und 10mm, beispielsweise zwischen 3mm und 10mm, insbesondere zwischen 4mm und 10mm, voneinander beabstandet. Die erste Höhe h1 der ersten Polfasern 2a beträgt beispielsweise zwischen 13mm und 17mm, vorzugsweise 15mm, während die zweite Höhe h2 der zweiten Polfasern 2b unter Berücksichtigung der o.g. Differenz zwischen den beiden Ebenen E1, E2 beispielsweise einen Wert von zwischen 6mm und 12mm annimmt.

Die Abstände zwischen den Ebenen E1, E2 sowie die Einstellung der Höhen h; h1, h2 der einzelnen Polfasern 2; 2a, 2b innerhalb der jeweiligen Ebenen E1, E2 sind dabei toleranzbehaftet. Demnach variieren die Höhen h; h1, h2 der Polfasern 2; 2a, 2b innerhalb der jeweils zugeordneten Ebene E1, E2 herstellungsbedingt um beispielsweise 1 Prozent, so dass für jede Ebene E1, E2 quasi eine toleranzbedingte Breite (bzw. Höhe) anzunehmen ist, innerhalb derer die jeweils zugeordneten Polfasern 2a, 2b enden. Anders gesagt, enden die jeweiligen Polfasern 2a, 2b zumindest im Mittel innerhalb der jeweils zugeordneten Ebene E1, E2 bzw. weisen sie im Mittel die jeweilige der Ebene E1, E2 zugeordnete Höhe h1, h2 auf.

Demzufolge werden also innerhalb des Filtertuchs 1 übereinanderliegend zwei verschiedene Filterschichten ausgebildet, wodurch die Filtrationsfläche erhöht und die Filtration verbessert werden kann. Dies wird dadurch erreicht, dass ein großer Teil von Partikeln im zu filtrierenden Medium, beispielsweise grobe Partikel, bereits durch die längeren ersten Polfasern 2a abgefangen werden und ein weiterer Teil, beispielsweise verbleibende feinere Partikel, erst durch die kürzeren zweiten Polfasern 2b herausgefiltert werden. Um diesen Effekt gleichmäßig über das gesamte Filtertuch 1 zu erreichen, werden die jeweiligen Florketten 20 vorzugsweise so eingebracht, dass sich Florketten 20 mit den längeren ersten Polfasern 2a und Florketten 20 mit den kürzeren zweiten Polfasern 2b abwechseln, um eine gleichmäßige Verteilung zu erreichen.

Zur weiteren Verbesserung der Filterwirkung sind die längeren ersten Polfasern 2a glatte bzw. untexturierte Mikrofasern und die kürzeren zweiten Polfasern 2b texturierte Mikrofasern, d.h. Mikrofasern, die in mechanischen oder thermomechanischen Verfahren dauerhaft aufgebauscht, gekräuselt, gewellt oder geschlungen werden. Die zweite Höhe h2 solcher texturierten Mikrofasern bezieht sich dabei auf den texturierten Zustand.

Grobe Partikel können sich demnach an den glatten Mikrofasern verfangen und feine Partikel können noch in die im Filtertuch 1 tieferliegenden texturierten Mikrofasern gelangen, um dort entsprechend abgefangen zu werden. Grundsätzlich können jedoch für beide unterschiedlich langen Polfasern 2a, 2b auch nur glatte Mikrofasern zur Anwendung kommen. Jegliche Mikrofasern (glatt oder texturiert) sind dabei synthetisch aus Polyamid und Polyester gefertigt.

Statt Mikrofasern können aber auch Stapelfasern in der entsprechenden Ausführung (glatt oder texturiert) zur Anwendung kommen. Mikrofasern weisen demgegenüber aber den Vorteil auf, dass aufgrund ihrer Feinheit viele von ihnen eng zusammengepackt werden können. Es werden viel mehr feine Fasern benötigt, um die jeweilige Polfaser 2 herzustellen, woraus sich eine größere dichtere Faseroberfläche der jeweiligen Polfaser 2 ergibt. Somit ist ein verbessertes Partikelrückhaltevermögen insbesondere von kleineren Partikeln gegeben.

Weiterhin weisen die Polfasern 2 einen Pol-Titer t2 im Bereich von 100 dtex bis 2200 dtex, insbesondere im Bereich von 250 dtex bis 1100 dtex auf. Durch die Wahl des genannten Bereichs ist es möglich, eine ausreichende Dichte der Polfasern 2 zu erzielen und die entsprechende Filtrationswirkung zu erreichen.

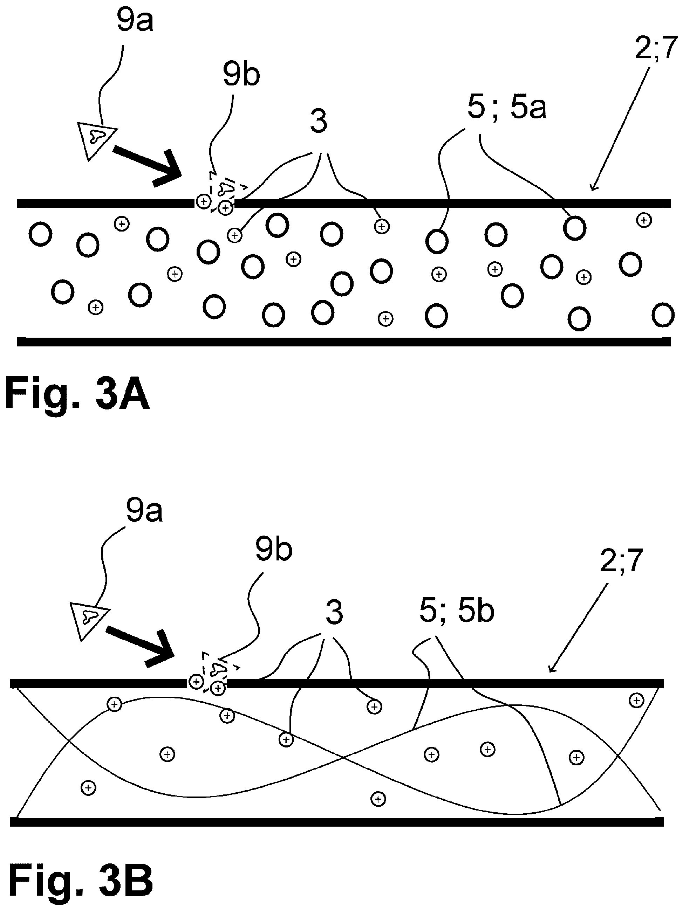

Die Geweberückenfasern 7 und/oder die Polfasern 2 können in der in Fig. 3A und 3B schematisch dargestellten optionalen Ausführung weiterhin Metall 5 aufweisen, wobei das Metall 5 dazu ausgebildet ist, bei Kontakt mit Wasser antimikrobielle Metallionen 3 bereitzustellen. In den Figuren wird dabei angenommen, dass der Aufbau der Polfasern 2 und der Geweberückenfasern 7 identisch ist, so dass die nachfolgende Erklärung analog auch für die Geweberückenfasern 7 gilt.

Figur 3A zeigt schematisch eine Polfaser 2, wobei Metall-Nanopartikel 5a in der Polfaser 2 angeordnet sind. Durch die Metall-Nanopartikel 5a weist das die Polfasern 2 aufweisende Filtertuch 1 Metall 5 auf, welches bei Kontakt mit Wasser antimikrobielle Metallionen 3 bereitstellt.

Die Metall-Nanopartikel 5a wurden vorzugsweise bereits in eine Extrusionsmasse der Polfasern 2 eingebracht, so dass die Metall-Nanopartikel 5a homogen innerhalb der Polfaser 2 verteilt sind.

Dies weist den Vorteil auf, dass die Bildung oder Bereitstellung der antimikrobielle Metallionen 3 durch die Metall-Nanopartikel 5a bei Kontakt mit Wasser fortwährend geschieht, und kein schnelles Auswaschen des Metalls 5 erfolgt.

Die Metall-Nanopartikel 5a sind aus der Gruppe der Gold-, Silber-, Zink-, Kupfer-, Zirkon- und Quecksilbermetalle gebildet. Besonders bevorzugt ist hierbei Silber.

Bei Kontakt mit Wasser oxidiert das Metall 5 der Metall-Nanopartikel 5a und gibt die antimikrobiellen Metallionen 3 ab. Ein (intakter) Biofilm 9a, gebildet durch Bakterien, Viren, Algen oder Algenblüten, der sich auf der Oberfläche der Polfaser 2 absetzt, wird durch die antimikrobiellen Metallionen 3 aufgrund deren starker Reaktionsfreudigkeit angegriffen und in einen zerstörten Biofilm 9b umgewandelt. Die Umwandlung eines intakten Biofilms 9a in einen zerstörten Biofilm 9b durch die Metallionen 3 ist in Figur 3A durch den Pfeil illustriert.

Die antimikrobiellen Metallionen 3 reagieren bereits mit kleinsten Ansätzen eines Biofilms 9a und schädigen oder zerstören den Biofilm 9b dabei. Ein das Filtertuch 1 zusetzender Biofilm 9a kann sich somit gar nicht erst bilden. Durch die antimikrobiellen Metallionen 3 ist somit eine effektive Bekämpfung von Bakterien, Viren, Algen und Algenblüten, zusammengefasst als Biofilm 9a, möglich.

Figur 3B zeigt schematisch eine Polfaser 2, wobei Metalldrähte 5b in der Polfaser 2 angeordnet sind. Diese Ausführungsform ist alternativ oder zusätzlich zu den Figur 3A dargestellten Ausführungsform. Die Metalldrähte 5b wirken analog zu den Metall-Nanopartikeln 5a aus Figur 3A.

Bei Kontakt mit Wasser oxidiert das Metall 5 der Metalldrähte 5b und gibt die antimikrobiellen Metallionen 3 ab, welche in analoger Weise einen intakten Biofilm 9a in einen zerstörten Biofilm 9b umwandeln und somit ein Zusetzten des Filtertuchs 1 verhindern.

Mittels eines wie in Figur 1 dargestellten Scheibenfiltersegments 8, bespannt mit einem Filtertuch 1, welches wie in Figur 2 dargestellt aus Polfasern 2 und Geweberückenfasern 4 gebildet wird, wobei die Polfasern 2 und Geweberückenfasern 4 optional wie in Figur 3A oder 3B dargestellt Metall 5 in Form von Metall-Nanopartikeln 5a (Fig. 3A) oder in Form von Metalldrähten 5b (Fig. 3B) aufweisen, ist es möglich, ein Verfahren zur Wasserfiltration durchzuführen, wobei mit dem Filtertuch 1 Wasser zur Abwasserreinigung, Mischwasserbehandlung, Phosphorentfernung durch Flockungsfiltration, Rohabwasserfiltration (primary), Schlussfiltration (tertiary und quaternary / tertiäre und quartäre), Spurenstoffentfernung, Behandlung von Oberflächenwasser, Behandlung von Straßenabwasser, Trinkwasseraufbereitung oder Vorfiltration für eine Desinfektion durch das Filtertuch 1 geleitet wird.

Ein Filtertuch 1 wie in Figur 2 dargestellt wird insbesondere bei der Abwasserreinigung genutzt, zum Herausfiltern von Phosphor, Mikropartikeln, Pigmente und/oder Medikamentenrückständen. Somit wird unter Wasserfiltration insbesondere eine Abwasserreinigung verstanden.

### Bezugszeichen

- 1: Filtertuch
- 2: Polfasern
- 2a: erste Polfaser
- 2b: zweite Polfaser
- 3: antimikrobielle Metallionen
- 4: Geweberücken
- 5: Metall
- 5a: Metall-Nanopartikel
- 5b: Metalldrähte
- 7: Geweberückenfasern
- 8: Scheibenfiltersegment
- 9a: Biofilm (intakt)
- 9b: Biofilm (zerstört)
- 10: rechte Warenseite
- 10a: Außenseite der rechten Warenseite 10
- 20: Florkette

- d7: Durchmesser der Geweberückenfasern
- E1: erste Ebene der ersten Polfasern 2a
- E2: zweite Ebene der zweiten Polfasern 2b
- h: Höhe der Polfasern 2
- h1: erste Höhe der ersten Polfaser 2a
- h2: zweite Höhe der zweiten Polfaser 2b
- t2: Pol-Titer der Polfasern 2
- t7: Gewebe-Titer der Geweberückenfasern 7

## Patentansprüche

1. Filtertuch (1) zur Wasserfiltration, aufweisend einen Geweberücken (4) und Polfasern (2),
- wobei der Geweberücken (4) zumindest teilweise durch Geweberückenfasern (7) gebildet wird, und
- wobei die Polfasern (2) zumindest teilweise an dem Geweberücken (4) fixiert sind und die Polfasern (2) von dem Geweberücken (4) abragen und dabei eine Höhe (h) aufweisen,
**dadurch gekennzeichnet, dass** von dem Geweberücken (4) erste Polfasern (2a) abragen, die eine erste Höhe (h1) aufweisen, und zweite Polfasern (2b) abragen, die eine von der ersten Höhe (h1) abweichende zweite Höhe (h2) aufweisen, so dass die ersten Polfasern (2a) in einer ersten Ebene (E1) enden und die zweiten Polfasern (2b) in einer zweiten Ebene (E2) enden, wobei die erste Ebene (E1) und die zweite Ebene (E2) um mindestens 2mm voneinander beabstandet sind und die ersten Polfasern (2a) der ersten Höhe (h1) und die zweiten Polfasern (2b) der zweiten Höhe (h2) jeweils mindestens 30% der gesamten Polfasern (2) des Filtertuchs (1) ausmachen.

2. Filtertuch (1) nach Anspruch 1, **dadurch gekennzeichnet, dass** die Polfasern (2; 2a, 2b) zumindest teilweise mit den Geweberückfasern (7) verwebt, verwirkt, verstrickt und/oder vertuftet sind, wobei die Polfasern (2; 2a, 2b) vorzugsweise durch eine Florkette (20) gebildet sind, die jeweils an den Geweberückenfasern (7) angebunden ist, wobei sich je Florkette (20) zwei Polfasern (2; 2a, 2b) bilden und die Polfasern (2; 2a, 2b) derselben Florkette (20) vorzugsweise dieselbe Höhe (h; h1, h2) aufweisen.

3. Filtertuch (1) nach Anspruch 1 oder 2, **dadurch gekennzeichnet, dass** die ersten Polfasern (2a) und/oder die zweiten Polfasern (2b) jeweils als eine glatte Faser ausgebildet sind.

4. Filtertuch (1) nach einem der vorhergehenden Ansprüche, **dadurch gekennzeichnet, dass** die ersten Polfasern (2a) und/oder die zweiten Polfasern (2b) jeweils als eine texturierte Faser ausgebildet sind, beispielsweise als eine aufgebauschte oder gekräuselte oder gewellte oder geschlungene Faser.

5. Filtertuch (1) nach einem der vorhergehenden Ansprüche, **dadurch gekennzeichnet, dass** die Polfasern (2; 2a, 2b) und/oder die Geweberückenfasern (7) Polymere aufweisen, insbesondere Polyamid, Polyester, Polyethylenterephthalat und/oder Polypropylen, sowie deren Rezyklate.

6. Filtertuch (1) nach einem der vorhergehenden Ansprüche, **dadurch gekennzeichnet, dass** die Polfasern (2; 2a, 2b) und/oder die Geweberückenfasern (7) durch Multifilamente, Mikrofasern, Ultrafeinfasern, Monofilamente, Stapelfasern und/oder Fibrilliertes Tape-Garn gebildet werden.

7. Filtertuch (1) nach einem der vorhergehenden Ansprüche, **dadurch gekennzeichnet, dass** die ersten Polfasern (2a) der ersten Höhe (h1) und/oder die zweiten Polfasern (2b) der zweiten Höhe (h2) jeweils mindestens 40%, insbesondere 50%, der gesamten Polfasern (2) des Filtertuchs (1) ausmachen.

8. Filtertuch (1) nach einem der vorhergehenden Ansprüche, **dadurch gekennzeichnet, dass** die erste Ebene (E1) und die zweite Ebene (E2) um zwischen 2mm und 10mm, beispielsweise zwischen 3mm und 10mm, insbesondere zwischen 4mm und 10mm, voneinander beabstandet sind.

9. Filtertuch (1) nach einem der vorhergehenden Ansprüche, **dadurch gekennzeichnet, dass** die erste Höhe (h1) der ersten Polfasern (2a) zwischen 13mm und 17mm, vorzugsweise 15mm, beträgt und/oder die zweite Höhe (h2) der zweiten Polfasern (2b) einen Wert von zwischen 6mm und 12mm annimmt.

10. Filtertuch (1) nach einem der vorhergehenden Ansprüche, **dadurch gekennzeichnet, dass** die Polfasern (2; 2a, 2b) mit zunehmendem Abstand zum Geweberücken (4) auffächern.

11. Filtertuch (1) nach einem der vorhergehenden Ansprüche, **dadurch gekennzeichnet, dass** die Geweberückenfasern (7) und/oder die Polfasern (2; 2a, 2b) Metall (5) aufweisen, wobei das Metall (5) dazu ausgebildet ist, bei Kontakt mit Wasser antimikrobielle Metallionen (3) bereitzustellen, wobei das Metall (5) vorzugsweise ausgewählt ist aus der Gruppe bestehend aus Gold, Silber, Zink, Kupfer, Zirkon und Quecksilber.

12. Filtertuch (1) nach Anspruch 11, **dadurch gekennzeichnet, dass** das Metall (5) in den Geweberückenfasern (7) und/oder in den Polfasern (2; 2a, 2b) durch Metall-Nanopartikel (5a) gebildet ist, wobei die Metall-Nanopartikel (5a) ausgebildet sind, die antimikrobiellen Metallionen (3) bereitzustellen, wobei die Metall-Nanopartikel (5a) vorzugsweise einer Extrusionsmasse der Geweberückenfasern (7) und/oder der Polfasern (2; 2a, 2b) hinzugefügt sind.

13. Filtertuch (1) nach Anspruch 11 oder 12, **dadurch gekennzeichnet, dass** das Metall (5) in den Geweberückenfasern (7) und/oder in den Polfasern (2; 2a, 2b) durch Metalldrähte (5b) gebildet ist, insbesondere eingewebte, eingewirkte, eingestrickte und/oder eingetuftete Metalldrähte (5b), wobei die Metalldrähte (5b) ausgebildet sind, die antimikrobiellen Metallionen (3) bereitzustellen.

14. Filtertuch (1) nach einem der vorherigen Ansprüche, **dadurch gekennzeichnet, dass** die Polfasern (2) einen Pol-Titer (t2) im Bereich von 100 dtex bis 2200 dtex, insbesondere im Bereich 250 dtex bis 1100 dtex aufweisen und/oder die Geweberückenfasern (7) einen Gewebe-Titer (t7) im Bereich von 100 dtex bis 2200 dtex, insbesondere im Bereich 250 dtex bis 1100 dtex aufweisen.

15. Verfahren zur Wasserfiltration mit einem Filtertuch (1) nach einem der vorherigen Ansprüche, wobei Wasser zur Abwasserreinigung, Mischwasserbehandlung, Phosphorentfernung durch Flockungsfiltration, Rohabwasserfiltration, Schlussfiltration, Spurenstoffentfernung, Behandlung von Oberflächenwasser, Behandlung von Straßenabwasser, Trinkwasseraufbereitung oder Vorfiltration für eine Desinfektion durch das Filtertuch (1) geleitet wird.
